(19) Europäisches Patentamt
European Patent Office
Office européen des brevets

(11) **EP 4 063 237 A1**

(12) **EUROPEAN PATENT APPLICATION**
published in accordance with Art. 153(4) EPC

(43) Date of publication:
**28.09.2022 Bulletin 2022/39**

(21) Application number: **21832466.3**

(22) Date of filing: **28.06.2021**

(51) International Patent Classification (IPC):
*B62D 5/04* (2006.01)    *B62D 6/00* (2006.01)
*B62D 15/02* (2006.01)    *B60W 40/105* (2012.01)

(86) International application number:
**PCT/CN2021/102817**

(87) International publication number:
**WO 2022/001975 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.07.2020 CN 202010627434**

(71) Applicant: **China Faw Co., Ltd.
Changchun, Jilin 130011 (CN)**

(72) Inventors:
• **YU, Zhen
Changchun, Jilin 130011 (CN)**

• **WANG, Deping
Changchun, Jilin 130011 (CN)**
• **YU, Jinglong
Changchun, Jilin 130011 (CN)**
• **SHAN, Shuai
Changchun, Jilin 130011 (CN)**
• **MIAO, Weiwei
Changchun, Jilin 130011 (CN)**

(74) Representative: **Berggren Oy
P.O. Box 16
Eteläinen Rautatiekatu 10A
00101 Helsinki (FI)**

(54) **VEHICLE STEERING CONTROL METHOD, DEVICE AND SYSTEM**

(57) The present invention provides vehicle steering control method, apparatus and system. The vehicle steering control method includes that: a vehicle speed signal and a steering angle signal of a steering wheel of a vehicle are acquired; a proportional coefficient of a front wheel steering angle and a rear wheel steering angle of the vehicle is determined according to the vehicle speed signal; the front wheel steering angle is determined according to the steering angle signal; and the rear wheel steering angle is calculated according to the proportional coefficient and the front wheel steering angle, so as to improve the safety and reliability of vehicle steering control.

Fig. 1

## Description

### Cross-Reference to Related Application

The present invention claims priority to Chinese Patent Application No. 202010627434.X, filed on July 1, 2020, the disclosure of which is hereby incorporated by reference in its entirety.

### Technical Field

Embodiments of present invention relate to the technical field of vehicle control, and in particular to a vehicle steering control method, apparatus and system.

### Background

Currently, steering control of a vehicle generally receives a steering angle signal of a steering wheel of the vehicle by using a front wheel steering actuator of the vehicle, to control a front wheel steering angle of the vehicle. A rear wheel steering actuator of the vehicle acquires a vehicle state parameter signal of the entire vehicle, and calculates a rear wheel steering angle of the vehicle by adopting a specified algorithm, to drive the rear wheel steering actuator to move, so as to control the rear wheel steering angle.

However, in the related art, the calculation of the rear wheel steering angle by using the specified algorithm focuses on the control of a slip angle of a somatosensory vehicle during the manipulation of a driver, which needs a large amount of vehicle state information for the estimation of the slip angle, and is high in input precision requirement of a pavement friction coefficient, poor in system robustness, high in requirement for actuator response, and not rapid enough in vehicle response, thereby affecting the safety of the vehicle.

### Summary

At least some embodiments of present invention provide a vehicle steering control method, apparatus and system, so as at least to improve the safety and reliability of vehicle steering control.

In an embodiment of present invention, a vehicle steering control method is provided. The vehicle steering control method includes the following operations.

A vehicle speed signal and a steering angle signal of a steering wheel of a vehicle are acquired.

A proportional coefficient of a front wheel steering angle and a rear wheel steering angle of the vehicle is determined according to the vehicle speed signal.

The front wheel steering angle is determined according to the steering angle signal.

The rear wheel steering angle is calculated according to the proportional coefficient and the front wheel steering angle.

Optionally, the operation of determining, according to the vehicle speed signal, the proportional coefficient of the front wheel steering angle and the rear wheel steering angle of the vehicle includes the following operations.

A vehicle speed range, to which a vehicle speed of the vehicle belongs, is determined according to the vehicle speed signal.

The proportional coefficient of the front wheel steering angle and the rear wheel steering angle is determined according to the vehicle speed range.

Optionally, the vehicle speed range includes one of the followings: a first vehicle speed range, a second vehicle speed range, a third vehicle speed range, and a fourth vehicle speed range.

The operation of determining, according to the vehicle speed range, the proportional coefficient of the front wheel steering angle and the rear wheel steering angle includes the following operations.

In response to the vehicle speed of the vehicle belonging to the first vehicle speed range, the proportional coefficient of the front wheel steering angle and the rear wheel steering angle is determined as a first proportional coefficient k1. The first proportional coefficient is k1 = K'*R, where K' is a constant, and R is a minimum turning radius of the vehicle.

In response to the vehicle speed of the vehicle belonging to the second vehicle speed range, the proportional coefficient of the front wheel steering angle and the rear wheel steering angle is determined as a second proportional coefficient k2. The second proportional coefficient k2 is:

$$k2 = (-b+(m*a/(K2*L))*V^2)/(a+(m*b/(K1*L))*V^2)$$

where, m is the mass (kg) of the vehicle, V is the vehicle speed (m/s) of the vehicle, a is a distance (m) between a center of gravity of the vehicle and a front axle of the vehicle, b is a distance (m) between the center of gravity of the vehicle and a rear axle of the vehicle, L = a+b and L is a wheelbase (m), K1 is front axle equivalent cornering stiffness (N/rad) of the vehicle, and K2 is rear axle equivalent cornering stiffness (N/rad) of the vehicle.

In response to the vehicle speed of the vehicle belonging to the third vehicle speed range, the proportional coefficient of the front wheel steering angle and the rear wheel steering angle is determined as a third proportional coefficient k3. The third proportional coefficient k3 is:

$$k3 = (-b+(m*a/(K2*L))*V^2)/(a+(m*b/(K1*L))*V^2)$$

In response to the vehicle speed of the vehicle belonging to the fourth vehicle speed range, the proportional coefficient of the front wheel steering angle and the rear wheel steering angle is determined as a fourth proportional coefficient k4. The fourth proportional coefficient k4 is a fixed value.

Optionally, in response to the vehicle speed of the vehicle belonging to the first vehicle speed range, a value range of the vehicle speed V of the vehicle is: $0 \text{ km/h} \leq V < 15 \text{ km/h}$.

In response to the vehicle speed of the vehicle belonging to the second vehicle speed range, a value range of the vehicle speed V of the vehicle is: $15 \text{km/h} \leq V < 40 \text{km/h}$.

In response to the vehicle speed of the vehicle belonging to the third vehicle speed range, a value range of the vehicle speed V of the vehicle is: $40 \text{km/h} \leq V < 100 \text{km/h}$.

In response to the vehicle speed of the vehicle belonging to the fourth vehicle speed range, a value range of the vehicle speed V of the vehicle is: $V \geq 100 \text{ km/h}$.

Optionally, the vehicle steering control method further includes the following operations.

Rack position information of a rear wheel of the vehicle is acquired.

An actual steering angle of the rear wheel of the vehicle is determined according to the rack position information.

The rear wheel steering angle is corrected according to the actual steering angle.

In another embodiment of present invention, a vehicle steering control apparatus is further provided. The vehicle steering control apparatus includes a signal acquisition module, a proportional coefficient determination module, a front wheel steering angle determination module, and a rear wheel steering angle calculation module.

The signal acquisition module is configured to acquire a vehicle speed signal and a steering angle signal of a steering wheel of a vehicle.

The proportional coefficient determination module is configured to determine, according to the vehicle speed signal, a proportional coefficient of a front wheel steering angle and a rear wheel steering angle of the vehicle.

The front wheel steering angle determination module is configured to determine the front wheel steering angle according to the steering angle signal.

The rear wheel steering angle calculation module is configured to determine the rear wheel steering angle according to the proportional coefficient and the front wheel steering angle.

Optionally, the proportional coefficient determination module includes a vehicle speed determination unit and a proportional coefficient determination unit.

The vehicle speed determination unit is configured to determine a vehicle speed range, to which a vehicle speed of the vehicle belongs, according to the vehicle speed signal.

The proportional coefficient determination unit is configured to determine, according to the vehicle speed range, the proportional coefficient of the front wheel steering angle and the rear wheel steering angle.

Optionally, the vehicle steering control apparatus further includes a rack position acquisition module, an actual steering angle determination module, and a rear wheel steering angle correction module.

The rack position acquisition module is configured to acquire rack position information of a rear wheel of the vehicle.

The actual steering angle determination module is configured to determine an actual steering angle of the rear wheel of the vehicle according to the rack position information.

The rear wheel steering angle correction module is configured to correct the rear wheel steering angle according to the actual steering angle.

In another embodiment of present invention, a vehicle steering control system is further provided. The vehicle steering control system includes a motor angle control module, a motor vector control module, and the above vehicle steering control apparatus.

The motor angle control module is configured to output a target motor current to the motor vector control module according to the rear wheel steering angle determined by the vehicle steering control apparatus.

The motor vector control module is configured to drive a motor of the vehicle to rotate according to a value of the target motor current.

Optionally, the vehicle steering control system further includes a rack position detection module.

The rack position detection module is configured to detect rack position information of a rear wheel of the vehicle, and send the rack position information to the vehicle steering control apparatus, to cause the vehicle steering control apparatus to determine an actual steering angle of the rear wheel of the vehicle according to the rack position information after acquiring the rack position information, and correct the rear wheel steering angle of the vehicle according to the actual steering angle.

**Brief Description of the Drawings**

Fig. 1 is a flowchart of a vehicle steering control method according to an embodiment of present invention.

Fig. 2 is a flowchart of a method for determining a proportional coefficient according to an embodiment of present invention.

Fig. 3 is a schematic diagram of a curve of a proportional coefficient K and a vehicle speed according to an embodiment of present invention.

Fig. 4 is a flowchart of another vehicle steering control method according to an embodiment of present invention.

Fig. 5 is a schematic structural diagram of a vehicle steering control apparatus according to an embodiment of present invention.

Fig. 6 is a schematic structural diagram of another vehicle steering control apparatus according to an embodiment of present invention.

Fig. 7 is a schematic structural diagram of a vehicle steering control system according to an embodiment of present invention.

**Detailed Description**

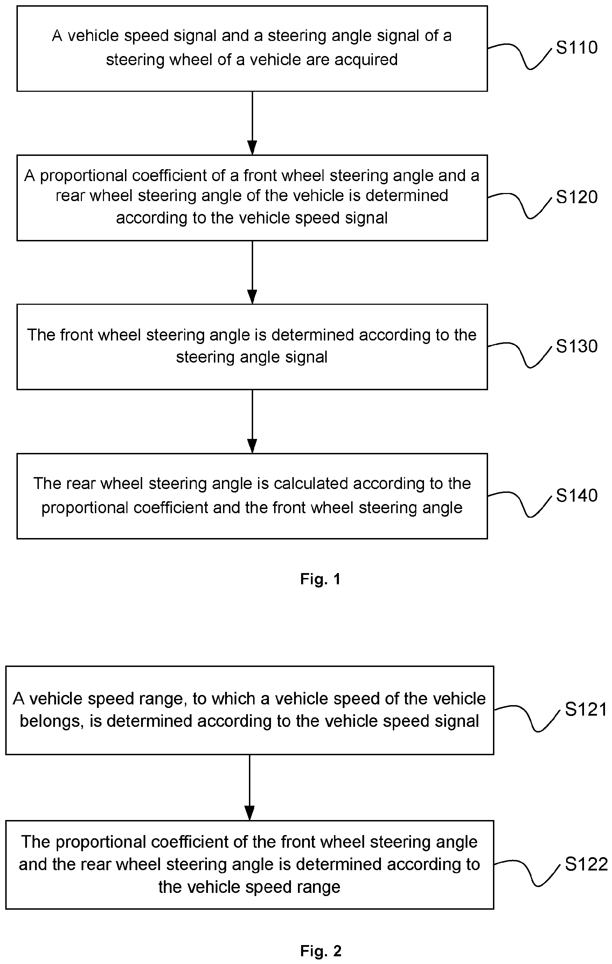

Embodiments of present invention provide a vehicle steering control method. The vehicle steering control method is applicable to steering control of a passenger vehicle. The vehicle steering control method may be performed by the vehicle steering control apparatus provided in the embodiments of present invention. The vehicle steering control apparatus may be implemented by means of at least one manner of software and hardware. Fig. 1 is a flowchart of a vehicle steering control method according to an embodiment of present invention. As shown in Fig. 1, the vehicle steering control method includes the following steps.

At step S110, a vehicle speed signal and a steering angle signal of a steering wheel of a vehicle are acquired.

The vehicle speed signal of the vehicle can represent a current travel speed of the vehicle. The steering angle signal of the steering wheel is a current rotation angle of the steering wheel. For example, in response to the steering wheel being rotated half a turn, the rotation angle of the steering wheel is 180°, and in response to the steering wheel being rotated one and half a turn, the rotation angle of the steering wheel is 540°. In this embodiment of present invention, the vehicle speed signal and the steering angle signal may be acquired by using a Controller Area Network (CAN) bus of the entire vehicle.

At step S120, a proportional coefficient of a front wheel steering angle and a rear wheel steering angle of the vehicle is determined according to the vehicle speed signal.

In response to the vehicle changing lanes, merging, overtaking, driving in curves, or turning, front wheels and rear wheels of the vehicle are required to coordinate with each other, to implement the control of vehicle steering. At a low speed, the front wheels are often required to steer in an opposite direction of the rear wheels, so that the vehicle can have a relatively small turning radius. At a high speed, the front wheels are required to steer in a same direction of the rear wheels, to reduce a yaw rate of the vehicle. Since the front wheel steering angle is a parameter for controlling the steering of the front wheels, and the rear wheel steering angle is a parameter for controlling the steering of the rear wheels, different proportional coefficients k of the front wheel steering angle and the rear wheel steering angle may be set in response to the vehicle traveling at different vehicle speeds, so as to meet vehicle steering requirements at different vehicle speeds.

At step S130, the front wheel steering angle is determined according to the steering angle signal.

Generally, the steering wheel of the vehicle controls a front wheel steering actuator of the vehicle, and then the front wheel steering angle of the vehicle is controlled by the front wheel steering actuator according to the steering angle signal of the steering wheel. In this case, the front wheel steering angle of of the vehicle may be calculated according to the steering angle signal of the steering wheel of the vehicle. Exemplarily, in response to the front wheel steering angle of corresponding to a maximum rotation angle 540° of the steering wheel in reverse or forward rotation being π/4 and the steering wheel not rotating, that is, in response to the front wheel steering angle of corresponding to a minimum rotation angle 0° of the steering wheel being 0, there is a one-to-one correspondence between the rotation angle of the steering wheel and the front wheel steering angle. Therefore, the current front wheel steering angle of the vehicle may be acquired according to the steering angle signal of the steering wheel.

At step S140, the rear wheel steering angle is calculated according to the proportional coefficient and the front wheel steering angle.

Since a turning radius of the vehicle is required to be considered during turning at the low speed, and the operation stability of the vehicle is required to be considered during turning at the high speed, different proportional coefficients of the front wheel steering angle and the rear wheel steering angle are determined according to the speed of the vehicle. In this way, the rear wheel steering angle of the vehicle may be calculated according to the proportional coefficient and the front wheel steering angle. Exemplarily, a calculation formula of the rear wheel steering angle may be shown as follows.

$$\sigma r = k \times \sigma f$$

where, or is the rear wheel steering angle of the vehicle, of is the front wheel steering angle that is determined according to the current steering angle signal of the steering wheel of the vehicle, and k is the proportional coefficient determined according to the current vehicle speed of the vehicle. Therefore, the current proportional coefficient of the front wheel steering angle and the rear wheel steering angle is directly determined according to the vehicle speed, and the current front wheel steering angle is determined by means of the steering angle signal of the steering wheel, so as to calculate the rear wheel steering angle. In this way, the rear wheels of the vehicle perform corresponding turning actions according to the rear wheel steering angle.

In this embodiment, the proportional coefficient of the front wheel steering angle and the rear wheel steering angle of the vehicle is determined by means of the current vehicle speed signal of the vehicle, and the front wheel steering angle of the vehicle is determined by means of the steering angle signal of the steering wheel of the vehicle, so that the current rear wheel steering angle of the vehicle can be directly calculated according to the front wheel steering angle and the proportional coefficient. In this way, the vehicle may have different steering control modes at different vehicle speeds. Therefore, the turning radius of the vehicle can be reduced at the low speed, and the operation stability and reliability of the vehicle can be enhanced at the high speed, so that the sensitivity of vehicle steering control can be increased.

Optionally, according to the vehicle speed signal, an operation of determining the proportional coefficient of the front wheel steering angle and the rear wheel steering angle of the vehicle includes the following steps. A vehicle speed range, to which the vehicle speed of the vehicle belongs, is determined according to the vehicle speed signal. The proportional coefficient of the front wheel steering angle and the rear wheel steering angle is determined according to the vehicle speed range. Fig. 2 is a flowchart of a method for determining a proportional coefficient according to an embodiment of present invention. As shown in Fig. 2, the method for determining the proportional coefficient in this embodiment of present invention includes the following steps.

At step S121, a vehicle speed range, to which a vehicle speed of the vehicle belongs, is determined according to the vehicle speed signal.

At step S122, the proportional coefficient of the front wheel steering angle and the rear wheel steering angle is determined according to the vehicle speed range.

In this embodiment of present invention, according to operation characteristics of the vehicle, different vehicle speed ranges may be set to correspond to different methods for calculating the proportional coefficient, so that the vehicle can have high steering control sensitivity and reliability in response to traveling in an entire vehicle speed range. In this case, the vehicle speed range may be first determined, so that the method for calculating the proportional coefficient corresponding to the vehicle speed range is obtained according to the vehicle speed range. Therefore, the proportional coefficient of the front wheel steering angle and the rear wheel steering angle of the vehicle at a current vehicle speed may be determined. In response to the vehicle speed range including one of the followings: a first vehicle speed range, a second vehicle speed range, a third vehicle speed range, and a fourth vehicle speed range, the vehicle may have four optional methods for calculating the proportional coefficient.

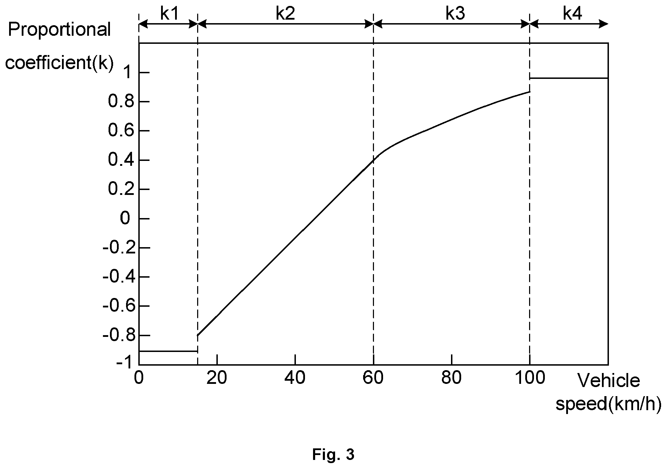

Exemplarily, Fig. 3 is a schematic diagram of a curve of a proportional coefficient K and a vehicle speed according to an embodiment of present invention. As shown in Fig. 3, in response to the vehicle speed of the vehicle belonging to the first vehicle speed range, the first vehicle speed range may, for example, be 0 km/h - 15 km/h. That is to say, in response to the vehicle speed signal of the vehicle showing the vehicle speed V of the vehicle to be 0 km/h≤V<15 km/h, it is to be considered that the vehicle is parked in or out of a parking space at the low speed. In this case, considering the convenience of vehicle manipulation, the front wheels and rear wheels of the vehicle are required to rotate in an opposite direction. Therefore, the proportional coefficient of the front wheel steering angle and the rear wheel steering angle of the vehicle may be determined as a first proportional coefficient k1. The first proportional coefficient k1 is a fixed value, and is related to the minimum turning radius of the vehicle, that is:

$$k1 = K'*R$$

where, K' is a constant, and R is the minimum turning radius of the vehicle. Therefore, the rear wheel steering angle or determined according to the first proportional coefficient k1 and the front wheel steering angle of is $k1*\sigma f$, and in this case, the minimum turning radius of the vehicle may be reduced by more than 10%.

In response to the vehicle speed of the vehicle belonging to the second vehicle speed range, the second vehicle speed range may, for example, be 15 km/h - 60 km/h. That is, in response to the vehicle speed signal of the vehicle showing the vehicle speed V of the vehicle to be 15 km/h≤V<60 km/h, it is to be considered that the vehicle travels in the low-speed, for example, the vehicle travels on a main road of a city, and the front wheels and rear wheels of the vehicle are also required to rotate in the opposite direction. In this case, considering manipulation sensitivity, the proportional coefficient of the front wheel steering angle and the rear wheel steering angle of the vehicle may be determined as a second proportional coefficient k2. The second proportional coefficient k2 is a quantity that changes according to the vehicle speed, that is:

$$k2 = (-b+(m*a/(K2*L))*V^2)/(a+(m*b/(K1*L))*V^2)$$

where, m is the mass (kg) of the vehicle, V is the vehicle speed (m/s) of the vehicle, a is a distance (m) between a center of gravity of the vehicle and a front axle of the vehicle, b is a distance (m) between the center of gravity of the vehicle and a rear axle of the vehicle, L = a+b and L is a wheelbase (m), K1 is front axle equivalent cornering stiffness (N/rad) of the vehicle, and K2 is rear axle equivalent cornering stiffness (N/rad) of the vehicle. Therefore, the rear wheel steering angle or determined according to the second proportional coefficient k2 and the front wheel steering angle of is $k2*\sigma f$. In this case, the transient response characteristics of the yaw velocity and lateral acceleration of the vehicle can be improved, thereby increasing steering sensitivity.

In response to the vehicle speed of the vehicle belonging to the third vehicle speed range, the third vehicle speed range may, for example, be 60 km/h - 100 km/h. That is, in response to the vehicle speed signal of the vehicle showing the vehicle speed V of the vehicle to be 60 km/h≤V < 100 km/h, it is to be considered that the vehicle travels in an intermediate speed, for example, the vehicle travels on a expressway or highway of a city. In this case, in response to the vehicle overtaking, merging, or changing lanes, steering control is required, and the rear wheels and the front wheels are required to rotate in a same direction. Therefore, travel stability needs to be considered. The proportional coefficient of the front wheel steering angle and the rear wheel steering angle of the vehicle may be determined as a third proportional coefficient k3. The third proportional coefficient k3 is a quantity that changes according to the vehicle speed, that is:

$$k3 = (-b+(m*a/(K2*L))*V^2)/(a+(m*b/(K1*L))*V^2)$$

Therefore, the rear wheel steering angle or is determined according to the third proportional coefficient k3 and the front wheel steering angle of is $k3*\sigma f$. In this way, a yawing moment can be increased, a yaw response speed is accelerated, and travel stability during obstacle avoidance is enhanced.

In response to the vehicle speed of the vehicle belonging to the fourth vehicle speed range, the fourth vehicle speed range may, for example, be greater than or equal to 100 km/h. That is, in response to the vehicle speed signal of the vehicle showing the vehicle speed V of the vehicle to be 100 km/h ≤ V, it is to be considered that the vehicle travels in the high speed, for example, the vehicle travels on the highway. In this case, in response to the vehicle overtaking, merging, or changing lanes, steering control is required, and the rear wheels and the front wheels are required to rotate in a same direction. Therefore, travel stability needs to be considered. The proportional coefficient of the front wheel steering angle and the rear wheel steering angle of the vehicle may be determined as a fourth proportional coefficient k4. The fourth proportional coefficient k4 is a fixed value, and may be debugged and determined according to an actual operation situation of the vehicle by means of a response speed and subjective evaluation of a rear wheel steering actuator.

In this embodiment, in response to the vehicle speed of the vehicle belonging to different vehicle speed ranges, the determined method for calculating the proportional coefficient of the front wheel steering angle and the rear wheel steering angle is different. In this way, the corresponding proportional coefficient can be determined for the operating conditions of the vehicle, so that the vehicle may have high steering control sensitivity, stability and safety.

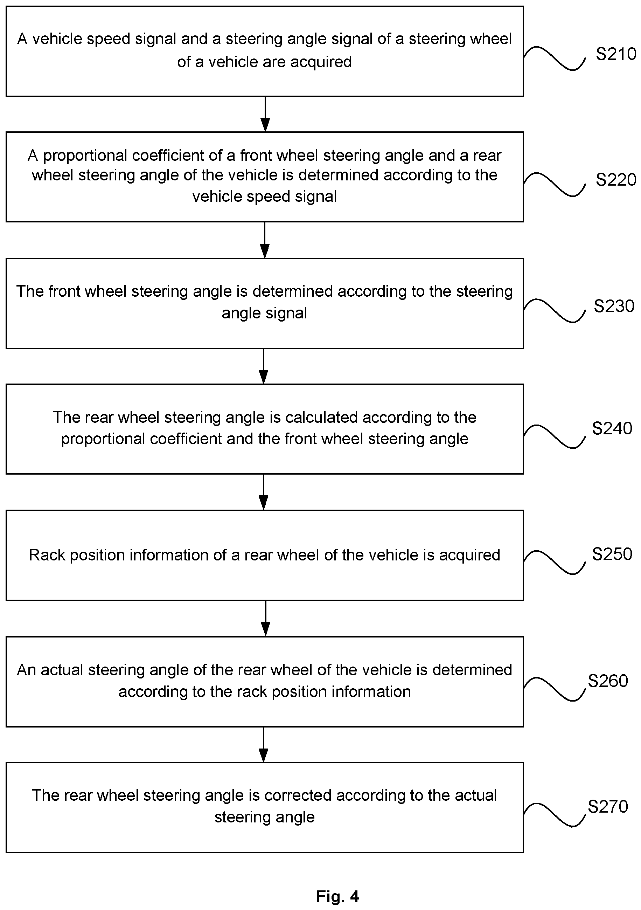

Optionally, on the basis of the above embodiments, Fig. 4 is a flowchart of another vehicle steering control method according to an embodiment of present invention. As shown in Fig. 4, the vehicle steering control method provided in this embodiment of present invention includes the following steps.

At step S210, a vehicle speed signal and a steering angle signal of a steering wheel of a vehicle are acquired.

At step S220, a proportional coefficient of a front wheel steering angle and a rear wheel steering angle of the vehicle is determined according to the vehicle speed signal.

At step S230, the front wheel steering angle is determined according to the steering angle signal.

At step S240, the rear wheel steering angle is calculated according to the proportional coefficient and the front wheel steering angle.

At step S250, rack position information of a rear wheel of the vehicle is acquired.

At step S260, an actual steering angle of the rear wheel of the vehicle is determined according to the rack position information.

At step S270, the rear wheel steering angle is corrected according to the actual steering angle.

In response to the current proportional coefficient of the front wheel steering angle and the rear wheel steering angle of the vehicle being determined by means of the vehicle speed of the vehicle, and the current front wheel steering angle of the vehicle being determined by means of the steering angle signal of the steering wheel, the rear wheel steering angle of the vehicle may be calculated by using the front wheel steering angle and the proportional coefficient, so that rear wheel motors are driven according to the rear wheel steering angle to drive the rear wheel steering actuator to move, thereby achieving the control of rear wheel steering. The rear wheel steering actuator includes a rack, and there is a correspondence between a position of the rack and an actual steering angle of the rear wheel. Through collecting position information of a rack in the rear wheel steering actuator, the actual steering angle of the rear wheel of the vehicle may be acquired. A deviation between the actual steering angle of the vehicle and the rear wheel steering angle calculated according to the front wheel steering angle and the proportional coefficient may be acquired by comparing the actual steering angle of the rear wheel with the rear wheel steering angle calculated according to the front wheel steering angle and the proportional coefficient. In response to the rear wheel steering angle being calculated subsequently, the deviation may be added, to cause the actual steering angle of the rear wheel to match an estimated rear wheel steering angle.

In this embodiment, through acquiring the rack position information of the rear wheel of the vehicle, the actual steering angle of the rear wheel of the vehicle is determined according to the rack position information, to correct the rear wheel steering angle according to the actual steering angle. In this way, the actual steering angle of the rear wheel can match the estimated rear wheel steering angle, thereby enhancing the accuracy, safety, and reliability of vehicle steering control.

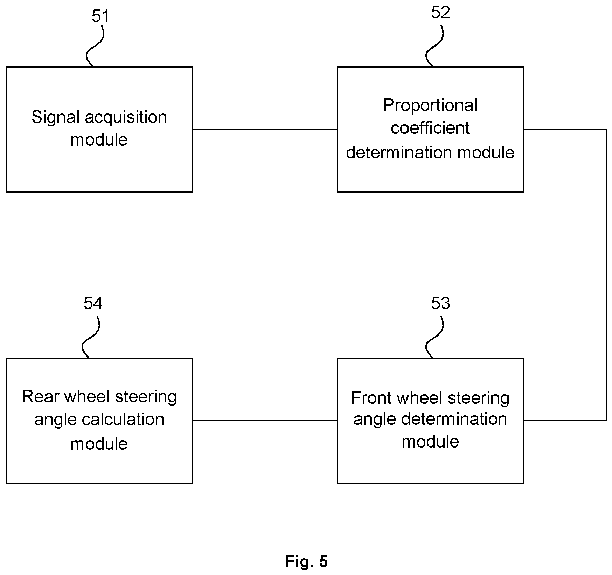

Another embodiment of present invention further provides a vehicle steering control apparatus. The vehicle steering control apparatus is applicable to steering control of a passenger vehicle. The vehicle steering control apparatus is applicable to perform the vehicle steering control method provided in this embodiments of present invention. The vehicle steering control apparatus may be implemented by means of at least one manner of software and hardware. Fig. 5 is a schematic structural diagram of a vehicle steering control apparatus according to an embodiment of present invention. As shown in Fig. 5, the vehicle steering control apparatus includes a signal acquisition module 51, a proportional coefficient determination module 52, a front wheel steering angle determination module 53, and a rear wheel steering angle calculation module 54. The signal acquisition module 51 is configured to acquire a vehicle speed signal and a steering angle signal of a steering wheel of a vehicle. The proportional coefficient determination module 52 is configured to determine, according to the vehicle speed signal, a proportional coefficient of a front wheel steering angle and a rear wheel steering angle of the vehicle. The front wheel steering angle determination module 53 is configured to determine the front wheel steering angle according to the steering angle signal. The rear wheel steering angle calculation module 54 is configured to determine the rear wheel steering angle according to the proportional coefficient and the front wheel steering angle.

In this embodiment, the proportional coefficient of the front wheel steering angle and the rear wheel steering angle signal of the vehicle is determined by means of the current vehicle speed signal of the vehicle, and the front wheel steering angle of the vehicle is determined by means of the steering angle signal of the steering wheel of the vehicle, so that the current rear wheel steering angle of the vehicle can be directly calculated according to the front wheel steering angle and the proportional coefficient. In this way, the vehicle may have different steering control modes at different vehicle speeds. Therefore, the turning radius of the vehicle can be reduced at the low speed, and the operation stability and reliability of the vehicle can be enhanced at the high speed, so that the sensitivity of vehicle steering control can be increased.

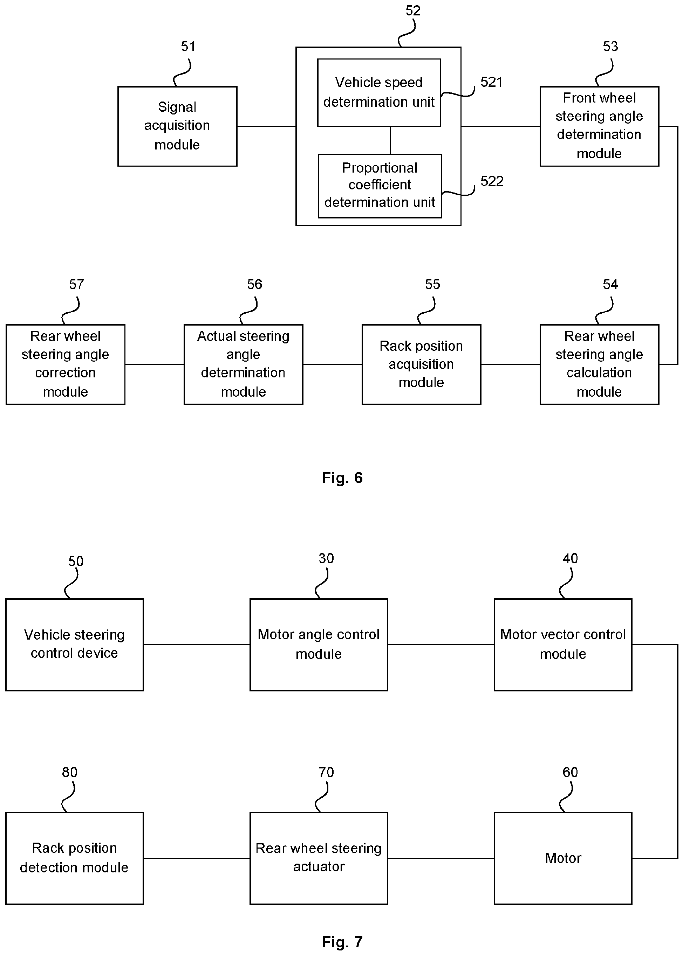

On the basis of the above embodiments, optionally, Fig. 6 is a schematic structural diagram of another vehicle steering control apparatus according to an embodiment of present invention. As shown in Fig. 6, the proportional coefficient determination module 52 includes a vehicle speed determination unit 521 and a proportional coefficient determination unit 522. The vehicle speed determination unit 521 is configured to determine a vehicle speed range, to which a vehicle speed of the vehicle belongs, according to the vehicle speed signal. The proportional coefficient determination unit 522 is configured to determine, according to the vehicle speed range, the proportional coefficient of the front wheel steering angle and the rear wheel steering angle.

On the basis of the above embodiments, optionally, continuously referring to Fig. 6, the vehicle steering control apparatus further includes a rack position acquisition module 55, an actual steering angle determination module 56, and a rear wheel steering angle correction module 57. The rack position acquisition module 55 is configured to acquire rack position information of a rear wheel of the vehicle. The actual steering angle determination module 56 is configured to determine an actual steering angle of the rear wheel of the vehicle according to the rack position information. The rear wheel steering angle correction module 57 is configured to correct the rear wheel steering angle according to the actual steering angle.

The vehicle steering control apparatus provided in this embodiment of present invention is configured to perform the vehicle steering control method provided in the embodiments of present invention. The technical principles and produced technical effects of the device are similar, which are not described herein again.

Another embodiment of present invention further provides a vehicle steering control system. The vehicle steering control system includes a motor angle control module, a motor vector control module, and the vehicle steering control apparatus provided in the embodiments of present invention. Therefore, the vehicle steering control system provided in this embodiment of present invention has the technical features and beneficial effects of the vehicle steering control apparatus provided in the embodiments of present invention.

Exemplarily, Fig. 7 is a schematic structural diagram of a vehicle steering control system according to an embodiment of present invention. As shown in Fig. 7, the vehicle steering control system includes a motor angle control module 30, a motor vector control module 40, and the vehicle steering control apparatus 50 provided in the embodiments of present invention. The motor angle control module 30 is configured to output a target motor current to the motor vector control module 40 according to the rear wheel steering angle determined by the vehicle steering control apparatus. The motor vector control module 40 is configured to drive a motor 60 of the vehicle to rotate according to a value of the target motor current, to cause the motor 60 to drive a rear wheel steering actuator 70 to move, so as to control a rear wheel to steer.

Optionally, continuously as shown in Fig. 7, the vehicle steering control system further includes a rack position detection module 80. The rack position detection module 80 is configured to detect rack position information of the rear wheel of the vehicle, and send the rack position information to the vehicle steering control apparatus 50, to cause the vehicle steering control apparatus 50 to determine an actual steering angle of the rear wheel of the vehicle according to the rack position information after acquiring the rack position information, and correct the rear wheel steering angle of the vehicle according to the actual steering angle. The rear wheel steering actuator 70 is provided with a rack, and there is a correspondence between a position of the rack and an actual steering angle of the rear wheel. The rack position detection module 80 detects position information of the rack in the rear wheel steering actuator 70, so that the actual steering angle of the rear wheel of the vehicle may be acquired, to cause the vehicle steering control apparatus 50 to acquire a deviation between the actual steering angle of the vehicle and the rear wheel steering angle calculated according to the front wheel steering angle and the proportional coefficient may be acquired by comparing the actual steering angle of the rear wheel with the rear wheel steering angle calculated according to the front wheel steering angle and the proportional coefficient. In response to the rear wheel steering angle being calculated subsequently, the deviation may be added, to cause the actual steering angle of the rear wheel to match an estimated rear wheel steering angle.

In this embodiment, the rack position detection module 80 detects the rack position information of the rear wheel of the vehicle, and determines the actual steering angle of the rear wheel of the vehicle according to the rack position information, to correct the rear wheel steering angle according to the actual steering angle. In this way, the actual steering angle of the rear wheel can match the estimated rear wheel steering angle, thereby enhancing the accuracy, safety, and reliability of vehicle steering control.

According to the vehicle steering control method, apparatus and system provided in the embodiments of present invention, the vehicle speed signal and the steering angle signal of the steering wheel of the vehicle are acquired, to determine the proportional coefficient of the front wheel steering angle and the rear wheel steering angle of the vehicle according to the vehicle speed signal, and the front wheel steering angle of the vehicle is determined according to the steering angle signal of the steering wheel, so that the rear wheel steering angle is calculated according to the proportional coefficient and the front wheel steering angle. In this embodiment of present invention, the vehicle can have different steering control modes at different vehicle speeds. Therefore, the turning radius of the vehicle can be reduced at the low speed, and the operation stability and reliability of the vehicle can be enhanced at the high speed, so that the sensitivity of vehicle steering control can be increased.

Claims

1. A vehicle steering control method, comprising:

    acquiring a vehicle speed signal and a steering angle signal of a steering wheel of a vehicle;
    determining, according to the vehicle speed signal, a proportional coefficient of a front wheel steering angle and a rear wheel steering angle of the vehicle;
    determining the front wheel steering angle according to the steering angle signal; and
    calculating the rear wheel steering angle according to the proportional coefficient and the front wheel steering angle.

2. The vehicle steering control method as claimed in claim 1, wherein determining, according to the vehicle speed signal, the proportional coefficient of the front wheel steering angle and the rear wheel steering angle of the vehicle comprises:

    determining a vehicle speed range, to which a vehicle speed of the vehicle belongs, according to the vehicle speed signal; and
    determining, according to the vehicle speed range, the proportional coefficient of the front wheel steering angle and the rear wheel steering angle.

3. The vehicle steering control method as claimed in claim 2, wherein the vehicle speed range comprises one of the followings: a first vehicle speed range, a second vehicle speed range, a third vehicle speed range, and a fourth vehicle speed range; and
determining, according to the vehicle speed range, the proportional coefficient of the front wheel steering angle and the rear wheel steering angle comprises:

    in response to the vehicle speed of the vehicle belonging to the first vehicle speed range, determining the proportional coefficient of the front wheel steering angle and the rear wheel steering angle as a first proportional coefficient k1, the first proportional coefficient being k1 = K'*R, wherein K' is a constant, and R is a minimum turning radius of the vehicle;
    in response to the vehicle speed of the vehicle belonging to the second vehicle speed range, determining the proportional coefficient of the front wheel steering angle and the rear wheel steering angle as a second proportional coefficient k2, the second proportional coefficient k2 being:

$$k2 = (-b + (m*a/(K2*L))*V^2)/(a + (m*b/(K1*L))*V^2);$$

    wherein m is the mass (kg) of the vehicle, V is the vehicle speed (m/s) of the vehicle, a is a distance (m) between a center of gravity of the vehicle and a front axle of the vehicle, b is a distance (m) between the center of gravity of the vehicle and a rear axle of the vehicle, L = a + b and L is a wheelbase (m), K1 is front axle equivalent cornering stiffness (N/rad) of the vehicle, and K2 is rear axle equivalent cornering stiffness (N/rad) of the vehicle;
    in response to the vehicle speed of the vehicle belonging to the third vehicle speed range, determining the proportional coefficient of the front wheel steering angle and the rear wheel steering angle as a third proportional coefficient k3, the third proportional coefficient k3 being:

    $k3 = (-b + (m*a/(K2*L))*V^2)/(a + (m*b/(K1*L))*V^2);$ and
    in response to the vehicle speed of the vehicle belonging to the fourth vehicle speed range, determining the proportional coefficient of the front wheel steering angle and the rear wheel steering angle as a fourth proportional coefficient k4, the fourth proportional coefficient k4 being a fixed value.

4. The vehicle steering control method as claimed in claim 3, wherein

    in response to the vehicle speed of the vehicle belonging to the first vehicle speed range, a value range of the vehicle speed V of the vehicle is: 0 km/h $\leq$ V < 15 km/h;
    in response to the vehicle speed of the vehicle belonging to the second vehicle speed range, a value range of the vehicle speed V of the vehicle is: 15km/h $\leq$ V < 40km/h;
    in response to the vehicle speed of the vehicle belonging to the third vehicle speed range, a value range of the vehicle speed V of the vehicle is: 40km/h $\leq$ V < 100km/h; and

in response to the vehicle speed of the vehicle belonging to the fourth vehicle speed range, a value range of the vehicle speed V of the vehicle is: $V \geq 100$ km/h.

5. The vehicle steering control method as claimed in claim 1, further comprising:

acquiring rack position information of a rear wheel of the vehicle;
determining an actual steering angle of the rear wheel of the vehicle according to the rack position information; and
correcting the rear wheel steering angle according to the actual steering angle.

6. A vehicle steering control apparatus, comprising:

a signal acquisition module, configured to acquire a vehicle speed signal and a steering angle signal of a steering wheel of a vehicle;
a proportional coefficient determination module, configured to determine, according to the vehicle speed signal, a proportional coefficient of a front wheel steering angle and a rear wheel steering angle of the vehicle;
a front wheel steering angle determination module, configured to determine the front wheel steering angle according to the steering angle signal; and
a rear wheel steering angle calculation module, configured to determine the rear wheel steering angle according to the proportional coefficient and the front wheel steering angle.

7. The vehicle steering control apparatus as claimed in claim 6, wherein the proportional coefficient determination module comprises:

a vehicle speed determination unit, configured to determine a vehicle speed range, to which a vehicle speed of the vehicle belongs, according to the vehicle speed signal; and
a proportional coefficient determination unit, configured to determine, according to the vehicle speed range, the proportional coefficient of the front wheel steering angle and the rear wheel steering angle.

8. The vehicle steering control apparatus as claimed in claim 6, further comprising:

a rack position acquisition module, configured to acquire rack position information of a rear wheel of the vehicle;
an actual steering angle determination module, configured to determine an actual steering angle of the rear wheel of the vehicle according to the rack position information; and
a rear wheel steering angle correction module, configured to correct the rear wheel steering angle according to the actual steering angle.

9. A vehicle steering control system, comprising a motor angle control module, a motor vector control module, and the vehicle steering control apparatus as claimed in any of claims 6 to 7, wherein

the motor angle control module is configured to output a target motor current to the motor vector control module according to the rear wheel steering angle determined by the vehicle steering control apparatus; and
the motor vector control module is configured to drive a motor of the vehicle to rotate according to a value of the target motor current.

10. The vehicle steering control system as claimed in claim 9, further comprising a rack position detection module, wherein the rack position detection module is configured to detect rack position information of a rear wheel of the vehicle, and send the rack position information to the vehicle steering control apparatus, to cause the vehicle steering control apparatus to determine an actual steering angle of the rear wheel of the vehicle according to the rack position information after acquiring the rack position information, and correct the rear wheel steering angle of the vehicle according to the actual steering angle.

| A vehicle speed signal and a steering angle signal of a steering wheel of a vehicle are acquired | S110 |

| A proportional coefficient of a front wheel steering angle and a rear wheel steering angle of the vehicle is determined according to the vehicle speed signal | S120 |

| The front wheel steering angle is determined according to the steering angle signal | S130 |

| The rear wheel steering angle is calculated according to the proportional coefficient and the front wheel steering angle | S140 |

**Fig. 1**

| A vehicle speed range, to which a vehicle speed of the vehicle belongs, is determined according to the vehicle speed signal | S121 |

| The proportional coefficient of the front wheel steering angle and the rear wheel steering angle is determined according to the vehicle speed range | S122 |

**Fig. 2**

Fig. 3

A vehicle speed signal and a steering angle signal of a steering wheel of a vehicle are acquired — S210

A proportional coefficient of a front wheel steering angle and a rear wheel steering angle of the vehicle is determined according to the vehicle speed signal — S220

The front wheel steering angle is determined according to the steering angle signal — S230

The rear wheel steering angle is calculated according to the proportional coefficient and the front wheel steering angle — S240

Rack position information of a rear wheel of the vehicle is acquired — S250

An actual steering angle of the rear wheel of the vehicle is determined according to the rack position information — S260

The rear wheel steering angle is corrected according to the actual steering angle — S270

Fig. 4

51

Signal acquisition
module

52

Proportional
coefficient
determination module

54

Rear wheel steering
angle calculation
module

53

Front wheel steering
angle determination
module

Fig. 5

51

Signal acquisition module

52

Vehicle speed determination unit  521

Proportional coefficient determination unit  522

53

Front wheel steering angle determination module

57

Rear wheel steering angle correction module

56

Actual steering angle determination module

55

Rack position acquisition module

54

Rear wheel steering angle calculation module

**Fig. 6**

50

Vehicle steering control device

30

Motor angle control module

40

Motor vector control module

80

Rack position detection module

70

Rear wheel steering actuator

60

Motor

**Fig. 7**

## INTERNATIONAL SEARCH REPORT

| International application No. |
| --- |
| **PCT/CN2021/102817** |

**A.    CLASSIFICATION OF SUBJECT MATTER**

B62D 5/04(2006.01)i;  B62D 6/00(2006.01)i;  B62D 15/02(2006.01)i;  B60W 40/105(2012.01)i

According to International Patent Classification (IPC) or to both national classification and IPC

**B.    FIELDS SEARCHED**

Minimum documentation searched (classification system followed by classification symbols)

B62D, B60W

Documentation searched other than minimum documentation to the extent that such documents are included in the fields searched

Electronic data base consulted during the international search (name of data base and, where practicable, search terms used)

CNABS, CNKI, SIPOABS, DWPI: 车辆, 转向, 控制, 转角, 转向角, 方向盘, 前轮, 后轮, 比例, 车速, vehicle, steer+, control +, angle, wheel, front, rear, proport+, spped

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 111762261 A (CHINA FAW GROUP CORPORATION) 13 October 2020 (2020-10-13) claims 1-10 | 1-10 |
| X | CN 102152808 A (ATTAC VEHICLE DESIGN & RESEARCH INSTITUTE LTD.) 17 August 2011 (2011-08-17) description, paragraphs 15-22, figures 1-4 | 1, 2, 5-10 |
| A | CN 111098916 A (HYUNDAI MOTOR COMPANY et al.) 05 May 2020 (2020-05-05) entire document | 1-10 |
| A | CN 104477237 A (SHENZHEN POLYTECHNIC) 01 April 2015 (2015-04-01) entire document | 1-10 |
| A | CN 107416021 A (BEIJING CH-AUTO TECHNOLOGY CO., LTD.) 01 December 2017 (2017-12-01) entire document | 1-10 |
| A | JP 06206564 A (MAZDA MOTOR CORPORATION) 26 July 1994 (1994-07-26) entire document | 1-10 |
| A | JP 2006315514 A (TOYOTA MOTOR CORP.) 24 November 2006 (2006-11-24) entire document | 1-10 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 September 2021** | **26 September 2021** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/102817**

**C.    DOCUMENTS CONSIDERED TO BE RELEVANT**

| Category* | Citation of document, with indication, where appropriate, of the relevant passages | Relevant to claim No. |
|---|---|---|
| A | US 6488113 B1 (GENERAL MOTORS CORPORATION) 03 December 2002 (2002-12-03) entire document | 1-10 |
| A | US 2020130735 A1 (HYUNDAI MOTOR CO., LTD. et al.) 30 April 2020 (2020-04-30) entire document | 1-10 |

Form PCT/ISA/210 (second sheet) (January 2015)

INTERNATIONAL SEARCH REPORT
Information on patent family members

International application No.

**PCT/CN2021/102817**

| Patent document cited in search report | | | Publication date (day/month/year) | Patent family member(s) | | | Publication date (day/month/year) |
|---|---|---|---|---|---|---|---|
| CN | 111762261 | A | 13 October 2020 | None | | | |
| CN | 102152808 | A | 17 August 2011 | None | | | |
| CN | 111098916 | A | 05 May 2020 | US | 2020130735 | A1 | 30 April 2020 |
| | | | | KR | 20200047866 | A | 08 May 2020 |
| CN | 104477237 | A | 01 April 2015 | None | | | |
| CN | 107416021 | A | 01 December 2017 | None | | | |
| JP | 06206564 | A | 26 July 1994 | None | | | |
| JP | 2006315514 | A | 24 November 2006 | None | | | |
| US | 6488113 | B1 | 03 December 2002 | None | | | |
| US | 2020130735 | A1 | 30 April 2020 | CN | 111098916 | A | 05 May 2020 |
| | | | | KR | 20200047866 | A | 08 May 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010627434X